(19) Europäisches Patentamt

European Patent Office

Office européen des brevets

(11) **EP 1 457 914 A1**

(12) **EUROPEAN PATENT APPLICATION**

(43) Date of publication:
**15.09.2004 Bulletin 2004/38**

(51) Int Cl.7: **G06K 7/00**, H04L 1/20,
H04L 27/06

(21) Application number: **03004992.8**

(22) Date of filing: **11.03.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (74) Representative: **HOFFMANN - EITLE Patent- und Rechtsanwälte Arabellastrasse 4 81925 München (DE)** |
| (71) Applicant: **3M Innovative Properties Company St. Paul, Minnesota 55133-3427 (US)** | Remarks:<br>Amended claims in accordance with Rule 86 (2) EPC. |
| (72) Inventor: **Wollnick, Reiner 42553 Velbert (DE)** | |

(54) **A transponder authentication system and method for authenticating a transponder**

(57) A magnetically coupled transponder reader (234) allows detection of errors in a received signal caused by a poor or variable transponder (216) position during transmission, without requiring transmission repetition. The transponder (216) variably damps an electromagnetic field from the transponder reader (234) to produce a magnetically coupled transponder signal, the signal is measured by a pair of Schmitt triggers (225,226) with differing switching levels, and the outputs of the Schmitt triggers (225,226) are compared to determine the quality of the magnetically coupled transponder signal. Poor quality signals will cause the outputs of the Schmitt triggers (225,226) to differ for periods of time greater than a predetermined time, while good quality signals will cause the outputs of the Schmitt triggers (225,226) to differ for periods of time less than the predetermined time.

Figure 2.

**Description**

**1. Field of the Invention**

This invention relates to authentication systems. It is applicable to an apparatus and method for authenticating a magnetically coupled transponder.

**2. Background of the Invention**

A transponder is a device which generates a signal on being stimulated by a trigger. The trigger may be a change in the magnetic field strength, the effect of an electromagnetic field, caused, for example by bringing the transponder and an electromagnetic field together, or it may be a more particular trigger such as a radio frequency encoded command. The transponder detects this trigger with a wire coil. To generate its signal a magnetically coupled transponder may utilize the damping effect that its coil has on the triggering field, and could encode its signal by variably damping the field.

Some transponder reader systems may operate without the transponder needing a battery because the reader emits an oscillating magnetic field with sufficient intensity as to provide the transponder power via its coil. These are known as passive transponders. It is the same property of the coil in the passive magnetically coupled transponder that allows it to draw energy from a field and to variably damp the field. In such a system the field created by the reader performs several functions:

firstly it provides sufficient energy to power an integrated circuit in the transponder;
secondly it may convey a signal from a reader to a transponder by amplitude modulation, or by gaps in the field; and
thirdly it conveys a signal from a transponder to the reader by varying the damping effect of the transponder's coil on the field.

Such passive magnetically coupled transponder systems are generally used for information gathering applications, or secure authentication, for example in automatic door lock control mechanisms, immobiliser systems, building entry systems, safes, and cabinets such as telecommunication cabinets. Systems are known which operate at distances from a fraction of a centimetre up to a meter or so. The signals generally use radio frequencies which pass through a wide range of non-metallic materials, so they are often housed in plastics or rubber materials. The transponders may use encoding and encryption methods and may have read-write capabilities. They are mass produced at a sufficiently low cost to permit their use in security passes or keys, and even in asset management applications. As they require no battery they have the advantage that they may be left or used without requiring maintenance or recharging.

By way of example the reader may continuously emit an oscillating magnetic field (hereafter described as the field), from which the coil in the transponder absorbs energy to power its integrated circuit. The field may have periods with constant amplitude, and periods where the amplitude is modulated so as to convey a code. The transponder's integrated circuit monitors the amplitude of the field and reads a code from it. If the code is a request for the transponder to identify itself or to provide other information, the transponder responds. It does so during a period where the reader is emitting a field with constant amplitude, by causing the transponders coil to vary the amount of energy that it absorbs from the readers field. The reader is able to detect this variation by monitoring the amplitude of its own field and will read a code from the amplitude modulation thus completing a reading.

Unfortunately to date it has not been possible to reliably transmit transponder information with only a single reading because errors could not be detected. An important source of errors is a large transponder reader distance or a changing transponder distance. At larger distances the damping effect of the coil of the transponder becomes weaker, especially as detected by the reader. The effect of the transponder damping the reader's field is known as magnetic coupling and its strength obeys a repeatable relationship with the transponder reader distance. It is known that there is an accelerating 'drop off' in this relationship at distances comparable with a maximum operating distance.

The main reasons for erroneous transmissions are that a reading will be attempted:

at a distance which would normally be adequate but which results in errors due to external interference or 'noise', or
at a distance too great for an error free transmission, or that the distance will increase during a reading to a distance too great for an error free reading.

A compounding effect is that in general at least one of the transponder and reader will be moving while a user is attempting to authenticate a transponder. Errors caused by the movement of particularly the transponder are especially likely in a noisy environment, if the transponder is handheld, or if the transponder is attached to an object subject to vibration.

A known and accepted method to improve the reliability has been to repeatedly read from the transponder to detect errors. This allows a statistical determination to be made as to whether a code has been transmitted correctly, but increases the time, computing capacity and energy required several fold. Even if the first reading was error free, the result may be that such a statistical determination can not be made before the transponder is moved away from the reader so in applications which should have low power consumption or should be concluded quickly it is unacceptable.

A method or means is needed, particularly in applications where there are many transponders with different codes, or where security or speed is of importance, that can detect whether the signal is reliable without requiring further readings. The method or means is needed to increase the efficiency and reliability of the magnetically coupled transponder reader system.

**Summary of the Invention**

According to one aspect of the present invention there is provided a method for processing a transponder signal including the steps of:

  demodulating the transponder signal to produce a demodulated signal;
  producing a first output which has a first output level when the demodulated signal exceeds a first switching level, and assumes a second output level when the demodulated signal falls below a second switching level lower than said first switching level;
  producing a second output which has a third output level when the demodulated signal exceeds a third switching level, and assumes a fourth output level when the demodulated signal falls below a predetermined switching level, at least one switching level of the second output being intermediate the first and second switching levels; and
  comparing the first and second outputs to produce a validation signal.

According to another aspect of the invention there is provided a method for authenticating a transponder including the steps of:

  demodulating the transponder signal to produce a demodulated signal;
  producing a first output which has a first output level when the demodulated signal exceeds a first switching level, and assumes a second output level when the demodulated signal falls below a second switching level lower than said first switching level;
  producing a second output which has a third output level when the demodulated signal exceeds a third switching level, and assumes a fourth output level when the demodulated signal falls below a predetermined switching level, at least one switching level of the second output being intermediate the first and second switching levels;
  comparing the first and second outputs to produce a validation signal; and
  determining whether any one of said first output and said second output matches any authenticated code, and determining whether said validation signal indicates that the fidelity of the transponder signal transmission exceeds a predetermined level, to produce an authentication signal.

According to another aspect of the invention there is provided a method including the steps of:

  demodulating the transponder signal to produce a demodulated signal;
  producing a first output which has a first output level when the demodulated signal exceeds a first switching level, and assumes a second output level when the demodulated signal falls below a second switching level lower than said first switching level;
  producing a second output which has a third output level when the demodulated signal exceeds a third switching level, and assumes a fourth output level when the demodulated signal falls below a predetermined switching level, at least one switching level of the second output being intermediate the first and second switching levels;
  comparing the first and second outputs to produce a validation signal;
  determining whether any one of said first output and said second output matches any authenticated code, and determining whether said validation signal indicates that the transponder signal was transmitted with high fidelity to produce an authentication signal; and
  including the step of reading the authentication signal and activating a lock if the authentication signal indicates that the transponder signal was transmitted with any authenticated code and that the fidelity of the transponder signal transmission exceeds a predetermined level.

According to another aspect of the present invention there is provided a signal assessing circuit for assessing a transponder signal having:

a demodulator adapted to demodulate said transponder signal to produce a demodulated signal;
a hysteresis circuit defining a first switching level and a second switching level lower than said first switching level, connected to receive the demodulated signal and adapted to produce a first output having a first value when the demodulated signal exceeds the first switching level, and assuming a second value when the demodulated signal falls below the second switching level;
a threshold circuit defining at least a third switching level intermediate the first and second switching levels, connected to receive the demodulated signal and adapted to produce a second output which has a third value when the demodulated signal exceeds the third switching level, and assumes a fourth value when the demodulated signal falls below the predetermined switching level, at least one switching level of the second output being intermediate the first and second switching levels; and
a logic circuit adapted to compare said first output with said second output to produce a validation signal.

According to another aspect there is provided a transponder reader system having:

a reader coil adapted to generate a varying magnetic field, to receive a transponder signal as an electromagnetic input and to produce the transponder signal as an electronic output;
a demodulator adapted to demodulate said transponder signal to produce a demodulated signal;
a hysteresis circuit defining a first switching level and a second switching level lower than said first switching level, connected to receive the demodulated signal and adapted to produce a first output having a first value when the demodulated signal exceeds the first switching level, and assuming a second value when the demodulated signal falls below the second switching level;
a threshold circuit defining at least a third switching level intermediate the first and second switching levels, connected to receive the demodulated signal and adapted to produce a second output which has a third value when the demodulated signal exceeds the third switching level, and assumes a fourth value when the demodulated signal falls below the predetermined switching level, at least one switching level of the second output being intermediate the first and second switching levels;
a logic circuit adapted to compare said first output with said second output to produce a validation signal;
a code memory; and
a code authentication logic circuit adapted to compare the output from any one of the first and second circuits to at least one code from said code memory, and determine whether the validation signal from said logic circuit indicates that the fidelity of the transponder signal transmission exceeds a predetermined level, to produce an authentication signal.

According to another aspect of the invention there is provided a lock control system including:

a reader coil adapted to generate a varying magnetic field, to receive a transponder signal as an electromagnetic input and to produce the transponder signal as an electronic output;
a demodulator adapted to demodulate said transponder signal to produce a demodulated signal;
a hysteresis circuit defining a first switching level and a second switching level lower than said first switching level, connected to receive the demodulated signal and adapted to produce a first output having a first value when the demodulated signal exceeds the first switching level, and assuming a second value when the demodulated signal falls below the second switching level;
a threshold circuit defining at least a third switching level intermediate the first and second switching levels, connected to receive the demodulated signal and adapted to produce a second output which has a third value when the demodulated signal exceeds the third switching level, and assumes a fourth value when the demodulated signal falls below the predetermined switching level, at least one switching level of the second output being intermediate the first and second switching levels;
a logic circuit adapted to compare said first output with said second output to produce a validation signal;
a code memory;
a code authentication logic circuit adapted to compare the output from any one of the first and second circuits to at least one code from said code memory, and determine whether the validation signal from said logic circuit indicates a transponder signal was transmitted with high fidelity, to produce an authentication signal; and a lock activatable by said authentication signal.

According to another aspect of the invention there is provided a method of activating a lock, comprising the steps of:

producing a first output which has a first output level when a demodulated transponder signal exceeds a first switching level, and assumes a second output level when the demodulated transponder signal falls below a second switching level lower than said first switching level;

producing a second output which has a third output level when the demodulated transponder signal exceeds a third switching level, and assumes a fourth output level when the demodulated transponder signal falls below a predetermined switching level, at least one switching level of the second output being intermediate the first and second switching levels; and

comparing the first and second outputs and determining whether any one of said first output and said second output matches any authenticated code to activate the lock.

The first output level may be equal to the third output level and the second output level equal to the fourth output level. This has the added advantage of simplicity.

In another possibility the first output level may be equal to the fourth output level and the second output level equal to the third output level. This also has the added advantage of simplicity.

The predetermined switching level may be intermediate the second and third switching levels, and the third switching level intermediate the first switching level and the predetermined switching level.

Alternatively, the predetermined switching level may be substantially equal to the third switching level.

In another possibility the third switching level may be higher than the first switching level.

In another variant the predetermined switching level may be lower than the second switching level.

The operation of comparing the first and second outputs may include the step of:

if the first and second outputs do not correlate then determining whether the first output changes within a predetermined time.

Alternatively the operation of comparing the first and second outputs may include the step of:

if the first and second outputs do not correlate then determining when the first output changes.

In another possibility the operation of comparing the first and second outputs may include the steps of:

storing a value from the second output;
waiting a predetermined time; and
comparing the first output to the stored value of the second output.

In another variant the operation of comparing the first and second outputs may include the step of:

if the first and second outputs do not correlate then determining whether either of the first or second output changes within a predetermined time.

In another variant the operation of comparing the first and second outputs may include the step of:

if the first and second outputs do not correlate then determining when either of the first or second output changes.

The step of demodulating the transponder signal to produce a demodulated signal may include any of amplifying the transponder signal, filtering the transponder signal or filtering the transponder signal with a band pass filter.

The step of reading the authentication signal may include the step of activating a lock if the authentication signal indicates that the transponder signal was transmitted with high fidelity and conveyed any authenticated code.

Brief Description of the Drawings

For a better understanding of the invention, and to show how the same may be carried into effect, reference will now be made by way of example to the accompanying drawings, in which corresponding references refer to corresponding components, and in which :

Figure 1 is a block diagram of a conventional magnetically coupled transponder authentication system;

Figure 2 is a block diagram of a magnetically coupled transponder authentication system according to an embodiment of the present invention;

Figure 3 is a diagram showing a typical form of a transponder signal in a magnetically coupled transponder authentication system according to an embodiment of the present invention;

Figure 4 is a diagram showing a typical form of a demodulated transponder signal and typical relative switching levels of a first and second hysteresis circuit in a magnetically coupled transponder authentication system according to an embodiment of the present invention;

Figure 5 is a diagram showing a typical form of the outputs of a first and second hysteresis circuit when receiving a demodulated transponder signal in a magnetically coupled transponder authentication system according to an embodiment of the present invention;

Figure 6 is a diagram showing a typical form of a transponder signal in a magnetically coupled transponder authentication system according to an embodiment of the present invention, under less perfect conditions than as shown in Figure 3;

Figure 7 is a diagram showing a typical form of a demodulated transponder signal and typical relative switching levels of a first and second hysteresis circuit in a magnetically coupled transponder authentication system according to an embodiment of the present invention, under less perfect conditions than as shown in Figure 4;

Figure 8 is a diagram showing a typical form of the outputs of a first and second hysteresis circuit when receiving a demodulated transponder signal in a magnetically coupled transponder authentication system according to an embodiment of the present invention, under less perfect conditions than as shown in Figure 5;

Figure 9 is a flow chart of a magnetically coupled transponder authentication method according to an embodiment of the present invention;

Figure 10 is a circuit diagram of a reader of a magnetically coupled transponder authentication system according to an embodiment of the present invention;

Figure 11 is a diagram of the switching levels of a first and second hysteresis circuit according to an embodiment of the present invention;

Figure 12 is a diagram of the switching levels of a first and second hysteresis circuit according to an embodiment of the present invention;

Figure 13 is a diagram of the switching levels of a first and second hysteresis circuit according to an embodiment of the present invention;

Figure 14 is a diagram of the switching levels of a first and second hysteresis circuit according to an embodiment of the present invention;

Figure 15 is a diagram of the output levels of a first and second hysteresis circuit according to an embodiment of the present invention; and

Figure 16 is a diagram of the output levels of a first and second hysteresis circuit according to an embodiment of the present invention;

Description of the Preferred Embodiment

In the following there is described a magnetically coupled transponder authenticating system and method for authenticating a magnetically coupled transponder which permits an increase in the efficiency and reliability of readings. The system and method makes it possible to detect erroneous transponder readings especially due to poor magnetic coupling, and thus reduces to a minimum the number of required read cycles.

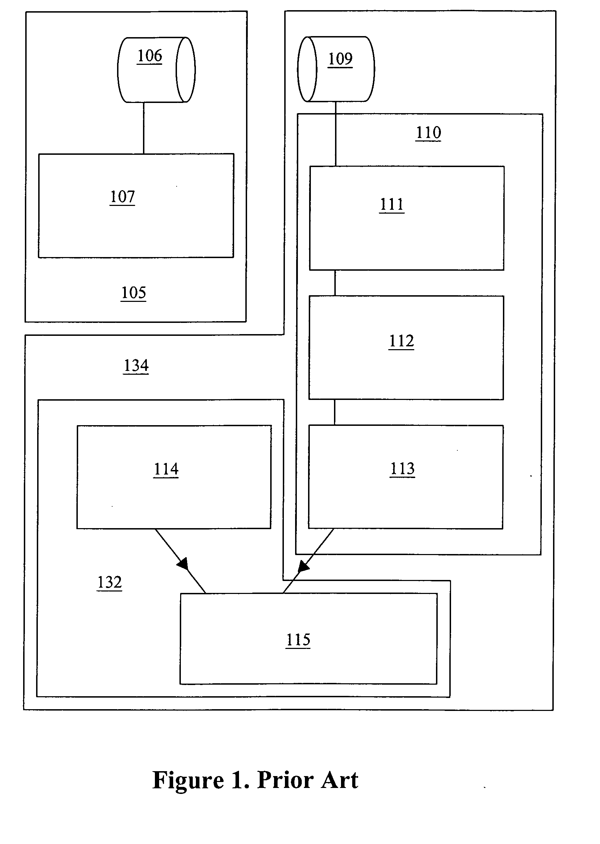

Referring to Figure 1 an example of a known authenticating system is illustrated. The system includes a transponder 105, and a reader 134 which includes a reader coil 109, signal modifier 110, and signal comparing circuit 132. The transponder 105 includes an integrated circuit 107, and a coil 106. The signal modifying circuit 110 includes a demodulator 111, and may include an amplifier 112 if greater signal strength is required, and a filter 113 if removal of frequency ranges is required. The signal comparing circuit 132 includes code memory 114 and code authentication logic circuit 115.

An electromagnetic field generated by the reader coil 109 causes the transponder 105 to send a signal. The field may oscillate at 125kHz. The signal is sent by variably damping the field using the coil 106. The signal is detected and received by the reader coil 109 and is modified by the signal modifier 110. The modified signal is read by the code authentication logic circuit 115 which compares it to a code or codes stored in code memory 114.

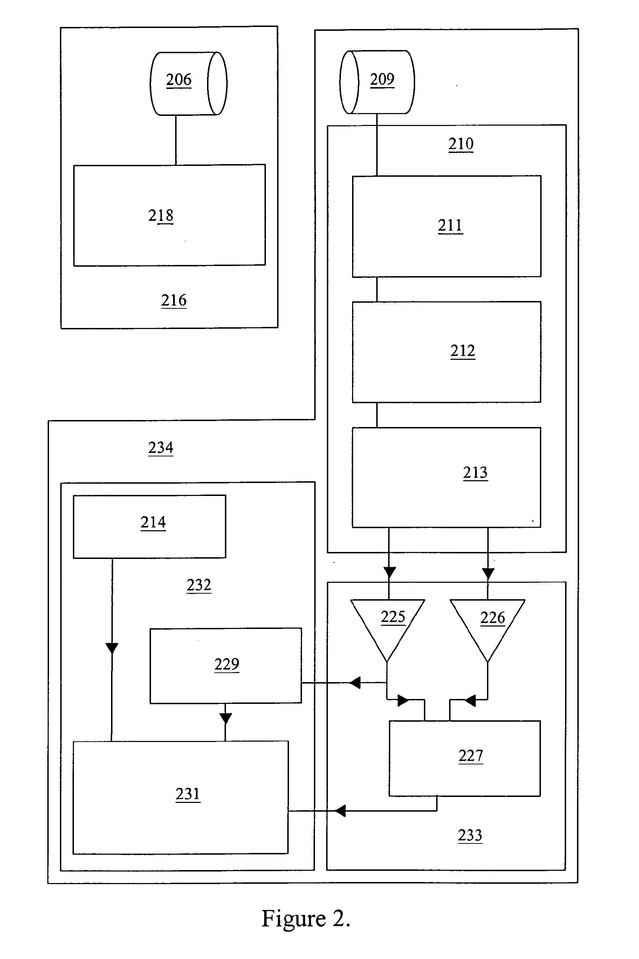

Referring to Figure 2, a magnetically coupled transponder authentication system according to an embodiment of the present invention is illustrated. The system consists of a transponder 216 and a reader 234, and includes some features that are comparable to features shown in Figure 1. The transponder includes a transponder coil 206 and an integrated circuit 218. The reader 234 includes a reader coil 209, a signal modifier 210, a signal assessing circuit 233, and a signal comparing circuit 232. The signal assessing circuit 233 includes first and second hysteresis circuits 225, 226 which may be Schmitt triggers, and a logic circuit 227. The signal comparing circuit 232 includes a code memory 229, optional, a code memory 214, and a code authentication logic circuit 231. The signal modifier may include any or all of a demodulator 211, an amplifier 212, and a filter 213. The reader 234 may include a reference clock to facilitate the evaluation of the signals.

Initially the reader may send a signal in the form of Amplitude Modulation of its electromagnetic field. The signal may be the switching on of the electromagnetic field or varying the field. When sending a signal from the transponder, the power consumption of the transponder 216 is varied so that an amplitude modulation is generated at the reader coil 209. This modulation depends on the distance between the transponder coil 206 and the reader coil 209. As the distance between the transponder coil and the coil increase the coupling and modulation decrease.

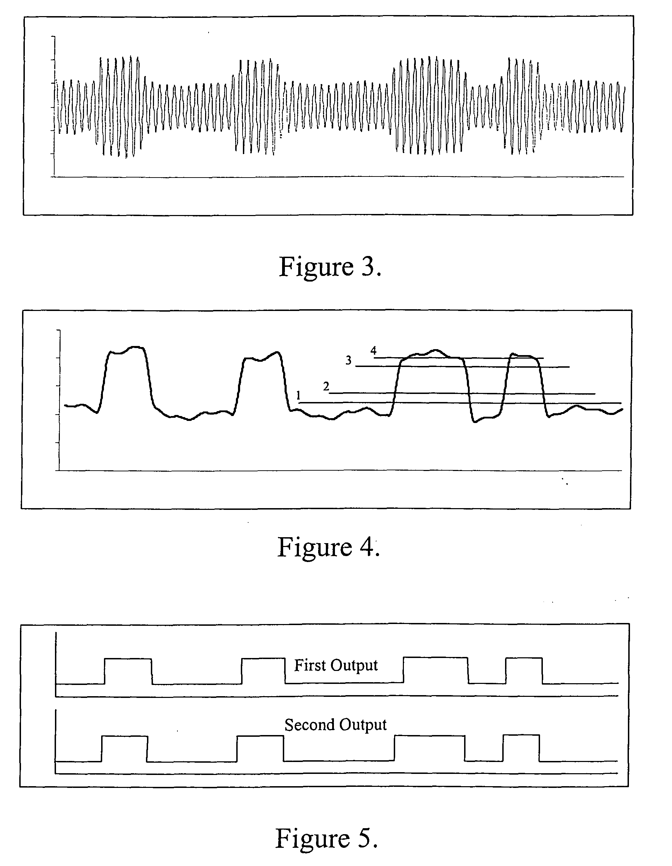

Referring to Figure 3 the transponder signal is preferably in the form of an Amplitude Modulated wave where the amplitude is modulated in a digital fashion between two levels in steps having different lengths. A code in the modulation of the transponder signal may be encoded in any of a wide range of ways but preferably uses only two levels, and the modulation of the signal would preferably be substantially rectangular. Preferably but not necessarily there would be a minimum time that the modulation of the signal would spend at either level. This minimum time would be defined by the method of encoding the signal and the bit rate or information rate of the signal.

An important functional unit of the circuit is the signal assessing circuit 233. In the signal assessing circuit 233, the first and second Schmitt triggers 225, 226 compare the demodulated illustrated in Figure 4 from the signal modifier 210 to three or four predetermined levels.

Referring to Figure 4 the first Schmitt trigger 225 defines a first switching level 4 and a second switching level 1 lower than the first switching level 4, producing an output having a waveform corresponding to the "first output" shown in Figure 5, and assuming a first value when the demodulated signal exceeds the first switching level 4, and assuming a second value when the demodulated signal falls below the second switching level 1. The second Schmitt trigger 226 defines third and fourth switching levels 3, 2, and produces the second output of Figure 5 which has a third value when the demodulated signal exceeds the third switching level 3, and assumes a fourth value when the demodulated signal falls below the fourth switching level 2. The reference numerals 1, 2, 3 and 4, may be taken to indicate the preferred positions of the levels in the preferred order of the levels. The output of one of the Schmitt triggers 225, 226 may be stored in code memory 229. Either Schmitt trigger may be used for this purpose.

In one embodiment the switching levels of the schmitt triggers could be calculated for the first and second Schmitt triggers as follows:

First switching level 4 of the first Schmitt trigger;

$$U_{HS} = U_0 * \frac{\overline{R23}}{R21+R23} * \left(1 + \frac{R20}{R22} + \frac{R20}{R24}\right) - U_{LO} * \frac{R20}{R22} ;$$

Second switching level 1 of the first Schmitt trigger

$$U_{LS} = U_0 * \frac{R23}{R21+R23} * \left(1 + \frac{R20}{R22} + \frac{R20}{R24}\right) - U_{HO} * \frac{R20}{R22} ;$$

Third switching level 3 of the second Schmitt trigger

$$U_{HS} = U_0 * \frac{R18}{R16+R18} * \left(1 + \frac{R15}{R17} + \frac{R15}{R19}\right) - U_{LO} * \frac{R15}{R17} \; ;$$

Fourth switching level 2 of the second Schmitt trigger

$$U_{LS} = U_0 * \frac{R18}{R16+R18} * \left(1 + \frac{R15}{R17} + \frac{R15}{R19}\right) - U_{HO} * \frac{R15}{R17} \; .$$

Where UHS is the higher switching level of a Schmitt trigger, ULS is the lower switching level of a Schmitt trigger, UHO is the higher output of a Schmitt trigger, and ULO is the lower output of a Schmitt trigger, and U0 is the power supply level, all of which depend upon the type of Schmitt trigger used. As an example, the power supply level may be 7V, and the Schmitt trigger outputs may be 0V or 5.5V.

As an example a transponder authenticating system may be provided in a telecommunications cabinet so as to authenticate a transponder carrying user, and permit access only to authenticated users. The authenticating system may record the code from a transponder and activate a lock if an authenticated code is received. This may have the effect that the lock will permit entry of a key into the lock and thus unlock the telecommunications cabinet.

Such a system may include additional features such as the capability to send a signal from the reader to the transponder by amplitude modulation of the reader's electromagnetic field, the capability of the transponder to encrypt a signal and the reader to correspondingly decrypt the signal, the capability to program the transponder with a reader, and for the transponder to store information from a reader.

Each of the Schmitt triggers effectively converts the 'messy' signal from the demodulator into a 'clean' rectangular wave. Each Schmitt trigger waits for the signal strength to reach a predetermined 'high' level 3 or 4 before outputting a logic '1'. It then waits for the signal strength to reach a predetermined 'low' level 1 or 2 before outputting a logic '0', and repeating the cycle indefinitely.

The arrangement can be viewed as checking the magnitude of the modulation in the signal with the first Schmitt trigger 225, and checking the magnitude of the unwanted fluctuations or interference with the second Schmitt trigger 226. The comparison of the Schmitt triggers outputs permits the production of a validation signal, the criterion being that the Schmitt trigger outputs predominantly correlate.

A 'clean', strong signal will affect both Schmitt triggers in the same way, but if there is an unacceptably small amount of modulation, or an unacceptably large amount of noise, or both, then the outputs of the Schmitt triggers will differ for substantial lengths of time. The output from either of the Schmitt triggers may be used to read a code into code memory 229 provided that the maximum amount of time that they may differ for is much less than the time for one bit, i.e. a valid correlation has been obtained.

To determine whether the signal is of acceptable quality, logic circuit 227 frequently or continuously compares the outputs of the first and second Schmitt triggers 225, 226. If they do not correlate, logic circuit 227 also either detects a change in the output of preferably the first Schmitt trigger 225, or records the time the output of preferably the first Schmitt trigger 225 takes to change. After a complete code has been read from one of the Schmitt triggers the code authentication logic circuit 231 compares a code which may be passed from code memory 229 optionally, to at least one code stored in code memory 214, and reads information from logic circuit 227. This reading and comparison allows determination of whether or not to authenticate the transponder and/or whether or not to record information about the transponder.

The first and second hysteresis circuits 225, 226 may be Schmitt triggers as indicated above, or they may be alternative logic producing a cumulative effect such as would be achieved by the described use of Schmitt triggers.

In one embodiment a code may be accepted as having been read from the transponder without errors if the following conditions are satisfied:

over a period of time, readings are taken by both Schmitt triggers with reading intervals being less than a predetermined time, and either
at every reading the outputs of the two Schmitt triggers correlate, or
after less than a predetermined time, the first Schmitt trigger correlates with the initial reading of the second Schmitt trigger.

An alternate set of conditions could be that:

over a period of time, readings are taken by the second Schmitt trigger, with a reading taken by the first Schmitt trigger a predetermined time after each reading by the second Schmitt trigger; and

at every such pair of readings the two Schmitt trigger outputs correlate.

In another embodiment a code may be accepted as having been read from the transponder without errors if the following conditions are satisfied:

over a period of time, readings are taken by both Schmitt triggers with reading intervals being less than a predetermined time, and either

at every reading the outputs of the two Schmitt triggers correlate, or

after less than a predetermined time, a Schmitt trigger output changes.

An additional condition to any of the set of conditions above may be that the code matches a predetermined format. In the conditions above the predetermined time will be less than any minimum time.

Assessment of the above conditions allows determination of whether the waveform of the demodulated signal is sufficiently imperfect as to make it possible or probable that errors had been made during the reading.

In summary there are two characteristics which may cause the signal to be detected as unacceptable:

a) The waveform may contain insufficient modulation, and thus the outputs of the first and second Schmitt triggers 225, 226 would differ. This would indicate at least one of the four possibilities listed below.

b) The demodulated signal may have significant fluctuations, usually due to the external environment, that are deviations from the ideal rectangular waveform. The waveform may pass a threshold of the second Schmitt trigger 226 during a period where it should be flat, and then return again to nearer the correct value. In this case the second Schmitt trigger 226 would change its output, and so the outputs of the two Schmitt triggers 225 and 226 would differ. This first type of fluctuation would be detected and would also indicate at least one of the four possibilities listed below.

These two determinations are completed jointly by the comparison of the two outputs, and the operation of the joint determination involves the cooperation of the two determining functions, each of which would not be completed without the other.

Detection of one or both of the conditions a) and b) above may be taken to indicate one of the following:

1) the magnetic coupling between the transponder and reader is too weak,

2) the transponder may not be functioning correctly because it is too far from the reader to receive sufficient energy,

3) the ambient interference or noise may be too great for the information to be transmitted error free,

4) the transponder may be or temporarily has been sufficiently far away from the reader during the course of a reading to cause any of the above three conditions.

In a real signal, the time for the demodulated signal to change from one value to another will be finite, due partially to interference and signal noise. The reader may include components which may increase this delay such as the demodulator 211, amplifier 212, and filter 213. The effect of this delay will be a switching level 2 or 3 of the first Schmitt trigger 225 being passed a significant amount of time before a switching level 1 or 4 of the second Schmitt trigger 226. It is because of this that a small delay should be permitted for the second Schmitt trigger 226 to provide the same output as the initial output of the first Schmitt trigger 225. In another embodiment a small delay should be permitted for any or both of the first and second Schmitt trigger outputs to change.

It has been found that the levels 1, 2, 3, 4 of the Schmitt triggers 225, 226 may be set so that if the signal strength is too weak, only the second Schmitt trigger 226 or alternatively neither Schmitt trigger 225, 226 will detect the changing modulation strength. Similarly if there is too much interference then the Schmitt trigger outputs will not agree.

Referring to Figures 3, 4 and 5, examples of signals at various stages are depicted for a reading where the transponder reader distance is acceptable. In such a system the transponder encodes a signal by variably damping the field generated by the reader coil 209 in the reader 234, and the reader detects the varying amplitude of its own signal. Figure 3 shows an example of such a signal as received by the reader coil 209 of the reader. Figure 4 shows an example of the signal of Figure 3 after being demodulated. It has portions generally at a level below bottom level 1 and portions generally at a level above top level 4. The first Schmitt trigger 225 determines whether the demodulated signal has most recently exceeded the first level 4, or dipped below the second level 1. The second Schmitt trigger 226 determines whether the voltage has most recently exceeded the third level 3, or dipped below the fourth level 2 which may be equal to the third level 3. Figure 5 shows an example of typical outputs from the first and second Schmitt triggers 225, 226 comparing a signal such as that shown in Figure 4. In one embodiment if a signal is being transmitted without errors then the two outputs of the Schmitt triggers 225, 226 will correlate, with the exception that the output of the first Schmitt trigger 225 will change shortly after the output of the second Schmitt trigger 226 changes. A small such delay is allowable, but a longer delay such as would be comparable to the normal time between two changes of a particular Schmitt trigger would indicate an erroneously transmitted signal.

If the output of the first Schmitt trigger 225 always correlates with the output of the second Schmitt trigger 226 after an acceptably short delay, and a code is read which matches a predetermined format then the code may be accepted as error free. It may be decoded and may be decrypted and will then be compared to known authenticated codes by the code authentication logic circuit 231 which determines whether to authenticate the transponder and/or record information.

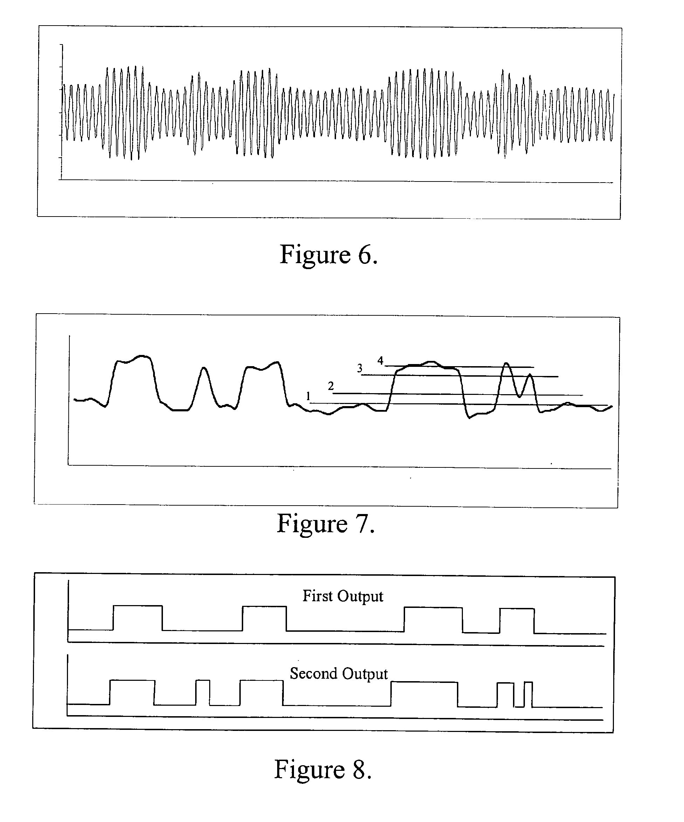

Referring to Figures 6, 7, and 8, examples of signals at various stages are depicted for a reading where the transponder reader distance is less than optimal, and the system is subject to substantial external interference. In this respect Figure 6 shows an example of a signal received by the reader coil 209. Figure 7 shows an example of such a signal as depicted in Figure 6 after being demodulated. It is less easily distinguished as generally having two possible levels. Figure 8 shows an example of typical outputs from the first and second Schmitt triggers 225, 226 comparing a signal such as that shown in Figure 7 in one embodiment. In this case it is clear that the outputs of the two Schmitt triggers 225, 226 often do not correlate. More importantly the lengths of time when the first and second Schmitt triggers do not correlate are often very substantial. Specifically this lag is much greater than the case with an acceptable transponder reader distance shown in Figure 5.

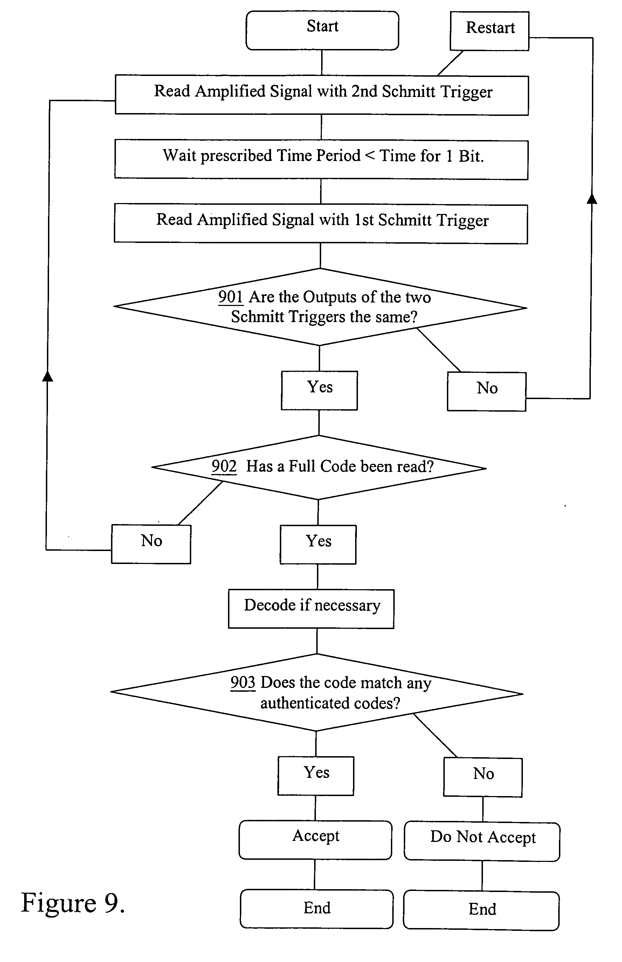

Referring to Figure 9, a flow diagram indicating one way in which the authenticating process could be performed is shown. The signal which may have been modified by signal modifier 210 is read by the second Schmitt trigger, and then after a prescribed time period less than the time for 1 bit of the code, the signal is read by the first Schmitt trigger. If the outputs from the two Schmitt triggers correspond 901 and a full code has been read 902 then the code may be decoded and or decrypted. If the code matches any authenticated codes 903, then the transponder may be authenticated or information regarding the transponder recorded. If a full code has not been read 902 then the read procedure is repeated in order to complete the reading of a full code. If from any reading, the output from the first Schmitt trigger does not correspond 901 to the earlier output of the second Schmitt trigger then the reading would be deemed to be unsuccessful and the transmission process might be abandoned, or repeated.

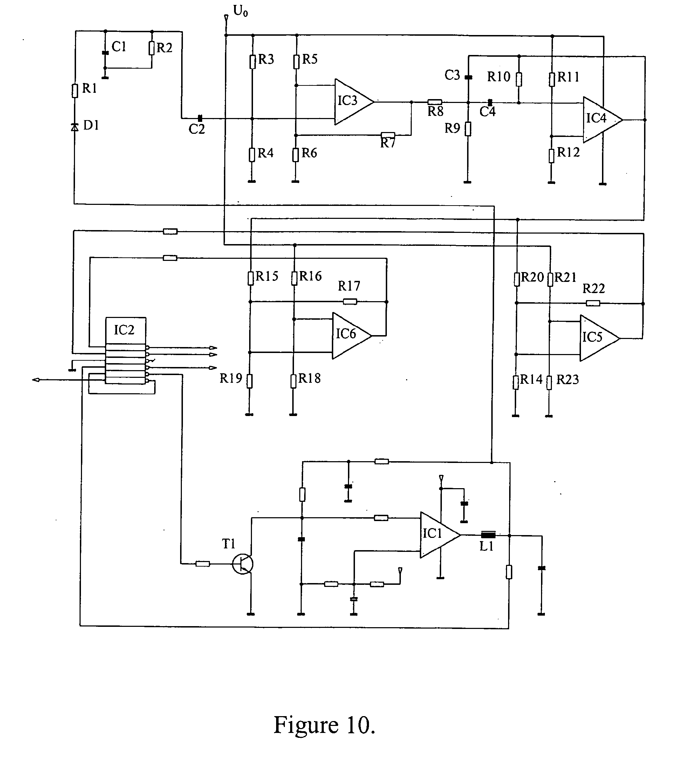

Referring to Figure 10, by way of example a circuit IC1 reads a signal from a reader coil L1, and passes it to a demodulating circuit including diode D1, capacitor C1, and resistor R1. The demodulating circuit passes a demodulated signal to serially coupled amplifiers IC3 and IC4. The amplified signal is passed to two Schmitt triggers IC5 and IC6 (225, 226) which are arranged in parallel. The outputs of the two Schmitt triggers pass to integrated circuit IC2 which performs assessing functions. Integrated circuit IC2 may control the circuit IC1 for a range of functions, and the reader coil L1 by means of transistor T1. The demodulator and filter demodulate the received signal high-resistively via the diode D1 and the resistor R1. The resistors R1, R2, R3, R4 and the capacitors C1 and C2 form a band pass by means of which the useful signal is separated from the high frequency signal. The resistors adjust simultaneously the operating point of the subsequent amplifier. IC3 and the resistors R5, R6 and R7 form a non-inverting amplifier to increase the level of the low frequency useful signal and may have an amplification factor in the region of 130, although in some applications the amplification factor may be much larger, or many times smaller. The voltage amplification can be determined according to the following formula:

$$\text{Amplification} \qquad A = 1 + \frac{R7}{R6 \| R5}$$

IC4, the resistors R8, R9, R10, R11, R12 and the capacitors C3, and C4 form a band pass filter with multiple negative feedback. According to "Halbleiter und Schaltungstechnik" by U. Tieze, Ch. Schenk, 10th ed. the following formulas and results are obtained for the band pass filter:

$$\text{Transition frequency} \qquad f_T = \frac{1}{2*\pi*C} * \sqrt{\frac{R8 + R9}{R8* R9* R10}}$$

$$\text{Amplification} \qquad A = \frac{- R10}{2*R8}$$

$$\text{Quality} \qquad Q = \pi*R10*C* f_T$$

The reader coil 209 may be an LC oscillator with a frequency which is determined by its inductance and capacitance. It may be sized such that it oscillates at a frequency around 125 kHz, and may be switched on and off by means of a transistor. Because the reader coil acts at the same time as a transmitting and receiving coil as well as a frequency fixing member, the circuit is always subject to resonance.

The resonant frequency of the oscillator may be calculated according to the following formula:

$$f_{res} = \frac{1}{2 \times \pi \times \sqrt{L_r \times C_r}}$$

where the fres is the resonant frequency of the oscillator; Lr is the inductance of the reader coil L1; and Cr is the theoretical capacitance of the capacitor C1.

It should be noted that as the coil may be an air coil it may have a significant winding capacity. To balance out this influence, the capacity of the capacitor C1 should be selected somewhat smaller than would be mathematically required.

The filter in the example above is optimized for the Temic Transponder TK5561.

There may be a reference clock included to provide a high frequency signal for facilitating the evaluation of the signals. Such a low impedance reference clock signal may desirable as the demodulated signal may be converted to a digital signal and analysed digitally.

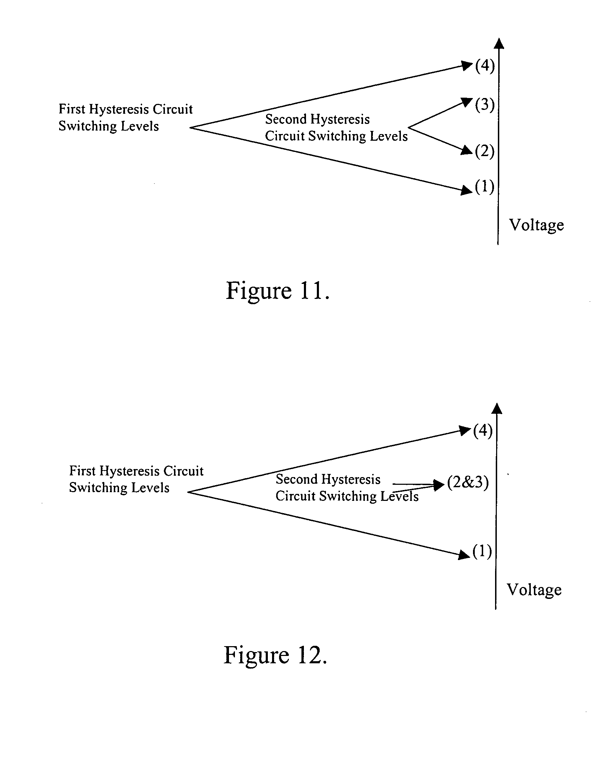

In a preferred embodiment referring to Figures 2 and 11 the third and fourth switching levels 3, 2 of the second hysteresis circuit 226 are both intermediate the first and second switching levels 4, 1 of the first hysteresis circuit 225. In this embodiment the first output will normally change shortly after the second output changes, and the logic circuit 227 detects the delay between these two events when the first and second outputs do not correlate. It may detect whether the delay is greater than a predetermined limit, it may determine the delay, or it may read the output of the first hysteresis circuit a predetermined length of time after reading the output of the second hysteresis circuit.

In another embodiment referring to Figures 2 and 12 the third and fourth switching levels 3, 2 of the second hysteresis circuit 225 are equal to one another and are both intermediate the first and second switching levels (4, 1) of the first hysteresis circuit 226. In this embodiment the logic circuit 227 performs as in the above embodiment.

A simple arrangement is now described suitable for use in the two embodiments described above. The second Schmitt trigger output is connected to an interrupt input of a microcontroller and the output of the first Schmitt trigger is connected to a normal input port. All that is necessary is to compare with suitable software whether the two inputs correlate. When they do, it can be assumed that the information can be decoded without error. Where the Schmitt trigger outputs do not correlate it is not possible to assume that the signal is error free. Using a software tool it is possible to determine if the signal level has fallen so low that the Schmitt triggers can no longer switch over. In this case there would be inordinately long breaks without and change in the signal. Due to the different switching levels the Schmitt triggers switch with a time delay. The evaluation of Schmitt trigger can only take place after a certain waiting time. However due to the steep rising edges of the changing signal, this waiting time is short relative to the bit length. The switching levels of the schmitt triggers should be chosen so that it is impossible to take the transponder too far away from the reader coil, and bring it back while a reading is taking place without the software detecting the low signal strength.

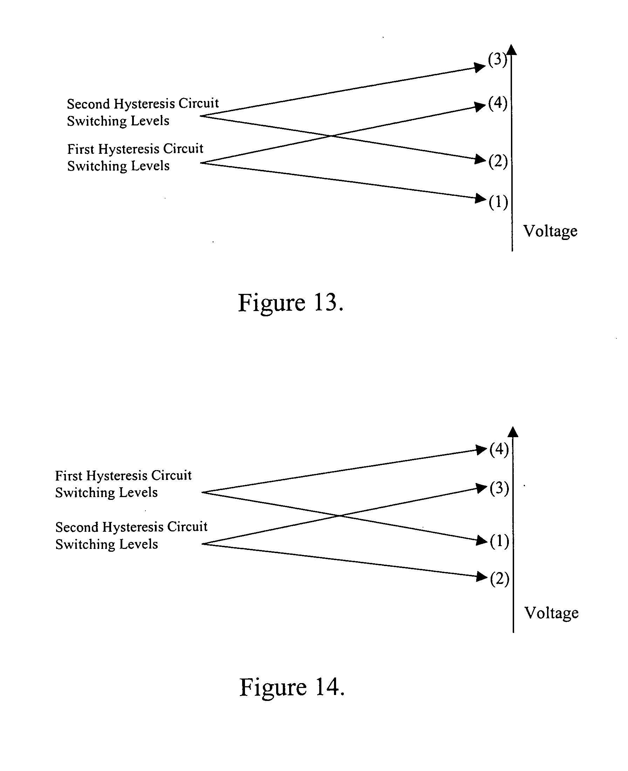

In a further embodiment referring to Figures 2, 13 and 14 only one of the third and fourth switching levels 3, 2 of the first hysteresis circuit 225 is intermediate the first and second switching levels 4, 1 of the second hysteresis circuit 226. In this embodiment the logic circuit 227 detects whether the first and second outputs correlate and determines whether they fail to correlate longer than a predetermined time, or the length of time that they do not correlate.

In a further embodiment, a transponder authentication system or method according to any of the previous embodiments is incorporated into a cabinet such as a telecommunications cabinet. A transponder reader incorporated into a locking mechanism determines the code in a transponder signal, and the fidelity of the transmission of the transponder signal. If the transponder's code matches an authenticated code, and the transponder's signal was transmitted with acceptably high fidelity, then the code from the transponder may be recorded and the lock of a door on the telecommunications cabinet is activated. This may cause the lock to permit a physical key to be inserted, cause the lock to unlock, to unlock for a prescribed time, to change between being locked and unlocked, or any other useful arrangement.

In another embodiment, a transponder authentication system according to any of the previous embodiments may include any of a wide range of encoding and encryption techniques known to the skilled in the art, providing increased security against a unauthorised discovery of authenticated codes. The transponder may also be programmable, re-programmable, or include read-write capabilities to permit specialized or sophisticated uses, such as encryption applications and storing information for later users for example regarding an item of cargo in transit.

In yet another embodiment, a transponder authentication system or method according to any of the previous embodiments is incorporated into a vehicle or building to permit authenticated entry only, into a car ignition system or immobiliser providing increased reliability, or into an asset management system providing increased reliability.

Finally a few points should be highlighted:

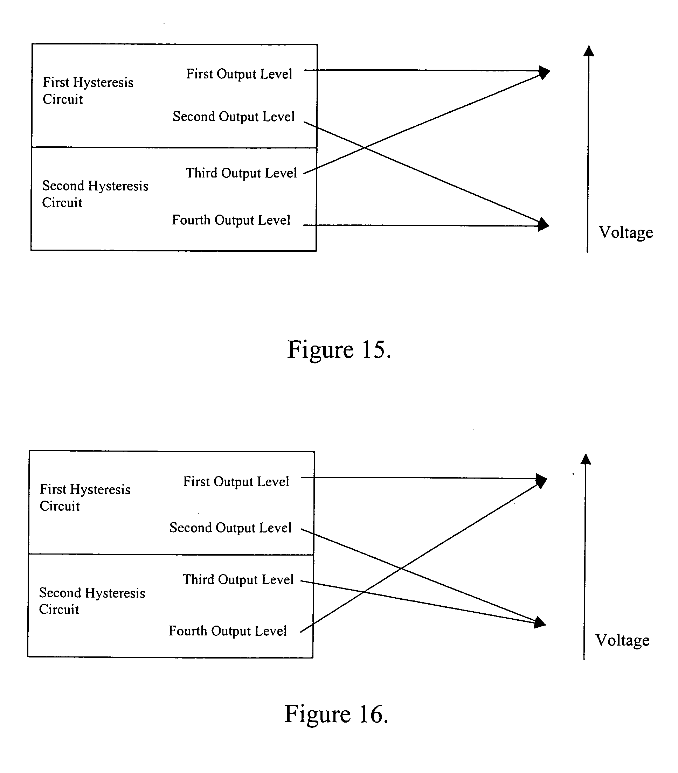

Referring to Figures 15 and 16, the hysteresis circuit outputs would normally be equal when the hysteresis circuits correspond as illustrated in Figure 15. However the system and method work equally well if the hysteresis circuit outputs are opposite when corresponding as illustrated in Figure 16. In this case the logic circuit 227 would be adapted to detect non-correspondence.

The simplest arrangements of two hysteresis circuits or Schmitt triggers would involve only two possible output voltages, but further Schmitt trigger output formats involving a number of possible voltage outputs greater than two are of course possible.

A hysteresis circuit as described above may be viewed as outputting a '1' if the demodulated signal has exceeded the highest switching level more recently than it has passed below the lowest switching level, and a '0' otherwise. It is unimportant whether two hysteresis circuits output the same voltage as each other to indicate respectively a '1' or a '0'. It is not necessary for either of the two output levels of the second hysteresis circuit to substantially equal either of the two output levels of the first hysteresis circuit. If two such hysteresis circuits both output a '1' or both output a '0' then they correlate. Otherwise they fail to correlate.

The invention can be implemented with a wide range of code and signal formats involving amplitude modulation. Hysteresis circuits or Schmitt triggers could be constructed so that any or all of a demodulator, amplifier, filter and decoder, would not be necessary. Code formats are possible where the information is encoded in the length of time that the signal would spend at any modulation level, rather than being encoded in the order of modulation levels in the signal.

It would be possible to operate the hysteresis circuits or Schmitt triggers such that the switching levels 2 and 3 of the first Schmitt trigger were equal to one another. With appropriate choice of switching levels 1 and 4, this arrangement may provide an adequate assessment of the signal for some applications. The case where switching level 3 is greater than switching level 2 is, however, preferred.

Any of the logic circuit 227, code memory 214, code memory 229, hysteresis circuits 225,226, and logic circuit 227 may be incorporated into the code authentication logic circuit 231.

In summary, the system and method assesses a magnetically coupled transponder signal with two hysteresis circuits. Each one observes a different aspect of the signal, and while neither could assess the usefulness of the signal independently, when linked together and compared, they provide a dependable source of information about the quality of the signal. When combined with a code comparing stage, the system and method can provide authentication of transponders with improved reliability and efficiency over the prior art.

Although methods and systems consistent with the present invention have been described with reference to one or more embodiments thereof, those skilled in the art will know of various changes in form and detail which may be made without departing from the present invention as defined in the appended claims and their full scope of equivalents.

**Claims**

1. A method for processing a transponder signal including the steps of:

   demodulating the transponder signal to produce a demodulated signal;
   producing a first output which has a first output level when the demodulated signal exceeds a first switching level (4), and assumes a second output level when the demodulated signal falls below a second switching level (1) lower than said first switching level (4);
   producing a second output which has a third output level when the demodulated signal exceeds a third switching level (3), and assumes a fourth output level when the demodulated signal falls below a predetermined switching level, at least one switching level of the second output being intermediate the first and second switching levels (4, 1); and
   comparing the first and second outputs to produce a validation signal.

2. The method according to claim 1, wherein:

   said first output level equals said third output level; and
   said second output level equals said fourth output level.

3. The method according to claim 1, wherein:

said first output level equals said fourth output level; and
said second output level equals said third output level.

4. The method according to any one of claims 1, 2 and 3, wherein said predetermined switching level is intermediate said second and third switching levels (1, 3), and said third switching level is intermediate said first switching level (4) and said predetermined switching level.

5. The method according to any one of claims 1, 2 and 3, wherein said predetermined switching level is substantially equal to said third switching level (3).

6. The method according to any one of claims 1, 2 or 3, wherein said third switching level (3) is higher than said first switching level (4).

7. The method according to any one of claims 1, 2 and 3, wherein said predetermined switching level is lower than said second switching level (1).

8. The method according to any one of claims 1 to 5, wherein the operation of comparing said first and second outputs includes the step of:

   if said first and second outputs do not correlate then determining whether said first output changes within a predetermined time.

9. The method according to any one of claims 1 to 5, wherein the operation of comparing said first and second outputs includes the step of:

   if said first and second outputs do not correlate then determining when said first output changes.

10. The method according to any one of claims 1 to 5, wherein the operation of comparing said first and second outputs includes the steps of:

   storing a value from the second output;
   waiting a predetermined time; and
   comparing the first output to the stored value of the second output.

11. The method according to any one of claims 1, 2, 3, 6 and 7, wherein the operation of comparing said first and second outputs includes the step of:

   if said first and second outputs do not correlate then determining whether either of said first or second output changes within a predetermined time.

12. The method according to any one of claims 1, 2, 3, 6 and 7, wherein the operation of comparing said first and second outputs includes the step of:

   if said first and second outputs do not correlate then determining when either of said first or second output changes.

13. The method according to any one of claims 1 to 12, wherein the step of demodulating the transponder signal to produce a demodulated signal includes the step of amplifying the transponder signal.

14. The method according to any one of claims 1 to 13, wherein the step of demodulating the transponder signal to produce a demodulated signal includes the step of filtering the transponder signal.

15. The method according to claim 14, wherein the step of filtering the transponder signal is performed by means of a band-pass filter.

16. A method for authenticating a transponder including the steps of:

   reading a transponder signal with a reader coil (209);

processing the transponder signal according to the method of any one of claims 1 to 15; and
determining whether any one of said first output and said second output matches any authenticated code, and
determining whether said validation signal indicates that the fidelity of the transponder signal transmission
exceeds a predetermined level, to produce an authentication signal.

17. The method according to claim 16, including the step of drawing power from the electromagnetic field provided by
the reader, and sending the transponder signal encoded in variable damping of said electromagnetic field with a
transponder.

18. The method according to claim 17, including the step of triggering a transponder to send a signal, with said electromagnetic field.

19. The method according to one of claim 17 and 18, including sending an encoded signal to a transponder by amplitude
modulation of said electromagnetic field, and reading the encoded signal with a transponder.

20. The method according to any one of claims 17 to 19, wherein the step of sending the transponder signal with the
transponder includes the step of encrypting said transponder signal, and the step of processing the transponder
signal includes the step of decrypting the transponder signal.

21. The method according to any one of claims 17 to 20, including the step of sending an instruction to the transponder
by amplitude modulation of the electromagnetic field, reading the instruction, and calculating or responding in
accordance with said instruction with the transponder.

22. The method according to claim 21, including programming a transponder by sending an instruction from a reader.

23. The method according to any one of claims 17 to 22, including storing the transponder code in a memory in the
reader.

24. The method according to any one of claims 17 to 23, including the step of reading the authentication signal and
activating a lock if the authentication signal indicates that the transponder signal was transmitted with any authenticated code and that the fidelity of the transponder signal transmission exceeds a predetermined level.

25. The method according to claim 24, wherein the step of reading the authentication signal and activating a lock
includes the step of opening the lock to permit the entry of a key.

26. A signal assessing circuit for assessing a transponder signal having:

a demodulator (211) adapted to demodulate said transponder signal to produce a demodulated signal;
a hysteresis circuit (225) defining a first switching level (4) and a second switching level (1) lower than said
first switching level (4), connected to receive the demodulated signal and adapted to produce a first output
having a first value when the demodulated signal exceeds the first switching level (4), and assuming a second
value when the demodulated signal falls below the second switching level (1);
a threshold circuit (226) defining at least a third switching level (3) intermediate the first and second switching
levels (4, 1), connected to receive the demodulated signal and adapted to produce a second output which has
a third value when the demodulated signal exceeds the third switching level (3), and assumes a fourth value
when the demodulated signal falls below the predetermined switching level, at least one switching level of the
second output being intermediate the first and second switching levels (4, 1); and
a logic circuit (227) adapted to compare said first output with said second output to produce a validation signal.

27. The signal assessing circuit according to claim 26, wherein:

said first output level equals said third output level; and
said second output level equals said fourth output level.

28. The signal assessing circuit according to claim 26, wherein:

said first output level equals said fourth output level; and
said second output level equals said third output level.

29. The signal assessing circuit according to any one of claims 26, 27 and 28, wherein said predetermined switching level is intermediate said second and third switching levels (1, 3), and said third switching level (3) is intermediate said first switching level (4) and said predetermined switching level.

30. The signal assessing circuit according to any one of claims 26, 27 and 28, wherein said predetermined switching level is substantially equal to said third switching level (3).

31. The signal assessing circuit according to any one of claims 26, 27 and 28, wherein said predetermined switching level is lower than said second switching level (1).

32. The signal assessing circuit according to any one of claims 26, 27 and 28, wherein said third switching level (3) is higher than said first switching level (4).

33. The signal assessing circuit according to any one of claims 26 to 32, wherein said threshold circuit (225) is a second hysteresis circuit.

34. The signal assessing circuit according to claim 33, wherein said first and second hysteresis circuits (225, 226) are bistable logic circuits.

35. The signal assessing circuit according to claim 33, wherein said first and second hysteresis circuits (225, 226) are Schmitt triggers.

36. The signal assessing circuit according to any one of claims 26 to 35, including an amplifier (212).

37. The signal assessing circuit according to any one of claims 26 to 36, including a filter (213).

38. The signal assessing circuit according to claim 37, wherein said filter (213) is a band-pass filter.

39. A transponder reader system having:

> a reader coil (209) adapted to generate a varying magnetic field, to receive a transponder signal as an electromagnetic input and to produce the transponder signal as an electronic output;
> a signal assessing circuit according to any one of claims 26 to 38;
> a code memory (214); and
> a code authentication logic circuit (231) adapted to compare the output from any one of the first and second circuits (225), (226) to at least one code from said code memory (214), and determine whether the validation signal from said logic circuit (227) indicates that the fidelity of the transponder signal transmission exceeds a predetermined level, to produce an authentication signal.

40. The transponder reader system according to claim 39, having at least one transponder adapted to draw power from an electromagnetic field provided by the reader, and adapted to produce a transponder signal encoded in variable damping of an electromagnetic field provided by the reader coil.

41. The transponder reader system according to claim 40, wherein at least one transponder is adapted to be activated to send said transponder signal by said electromagnetic field.

42. The transponder reader system according to one of claims 40 and 41, wherein said reader is adapted to send an encoded signal to a transponder by amplitude modulation of the field produced by the reader coil, and at least one transponder is adapted to read said encoded signal and store said code.

43. The transponder reader system according to any one of claims 40 to 42, wherein at least one transponder is adapted to encrypt said transponder signal, and said reader is adapted to decrypt said transponder signal.

44. The transponder reader system according to any one of claims 40 to 43, wherein said reader is adapted to send at least one instruction to a transponder, and at least one transponder is adapted to receive said instruction or instructions, and to calculate and respond in accordance with said instruction or instructions.

45. The transponder reader system according to claim 44, wherein the reader is adapted to program a transponder and at least one transponder is adapted to be programmable by a reader.

**46.** The transponder reader system according to any one of claims 40 to 45 including memory adapted to store the transponder code.

**47.** A lock control system including the transponder reader of any one of claims 40 to 46 and a lock activatable by said authentication signal.

**48.** A vehicle including the lock control system of claim 47.

**49.** A security fitting for an entrance including the lock control system of claim 47.

**50.** A telecommunications cabinet system including the lock control system of claim 47.

**51.** A method of activating a lock, comprising the steps of:

producing a first output which has a first output level when a demodulated transponder signal exceeds a first switching level (4), and assumes a second output level when the demodulated transponder signal falls below a second switching level (1) lower than said first switching level (4) ;
producing a second output which has a third output level when the demodulated transponder signal exceeds a third switching level (3), and assumes a fourth output level when the demodulated transponder signal falls below a predetermined switching level, at least one switching level of the second output being intermediate the first and second switching levels (4, 1); and
comparing the first and second outputs and determining whether any one of said first output and said second output matches any authenticated code to activate the lock.


**Amended claims in accordance with Rule 86(2) EPC.**

**1.** A method for processing a transponder signal including the steps of:

demodulating the transponder signal to produce a demodulated signal;
producing a first output which has a first output level when the demodulated signal exceeds a first switching level (4), and assumes a second output level when the demodulated signal falls below a second switching level (1) lower than said first switching level (4);

**characterized by**

producing a second output which has a third output level when the demodulated signal exceeds a third switching level (3), and assumes a fourth output level when the demodulated signal falls below a predetermined switching level, at least one switching level of the second output being intermediate the first and second switching levels (4, 1); and
comparing the first and second outputs to produce a validation signal.

**26.** A signal assessing circuit for assessing a transponder signal having:

a demodulator (211) adapted to demodulate said transponder signal to produce a demodulated signal;
a hysteresis circuit (225) defining a first switching level (4) and a second switching level (1) lower than said first switching level (4), connected to receive the demodulated signal and adapted to produce a first output having a first value when the demodulated signal exceeds the first switching level (4), and assuming a second value when the demodulated signal falls below the second switching level (1);

**characterized by**

a threshold circuit (226) defining at least a third switching level (3) intermediate the first and second switching levels (4, 1), connected to receive the demodulated signal and adapted to produce a second output which has a third value when the demodulated signal exceeds the third switching level (3), and assumes a fourth value when the demodulated signal falls below the predetermined switching level, at least one switching level of the second output being intermediate the first and second switching levels (4, 1); and
a logic circuit (227) adapted to compare said first output with said second output to produce a validation signal.

**51.** A method of activating a lock, comprising the steps of:

producing a first output which has a first output level when a demodulated transponder signal exceeds a first switching level (4), and assumes a second output level when the demodulated transponder signal falls below a second switching level (1) lower than said first switching level (4) ;

**characterized by**

producing a second output which has a third output level when the demodulated transponder signal exceeds a third switching level (3), and assumes a fourth output level when the demodulated transponder signal falls below a predetermined switching level, at least one switching level of the second output being intermediate the first and second switching levels (4, 1); and
comparing the first and second outputs and determining whether any one of said first output and said second output matches any authenticated code to activate the lock.

**Figure 1. Prior Art**

Figure 2.

Figure 3.

Figure 4.

Figure 5.

Figure 6.

Figure 7.

Figure 8.

```
        ┌──────────┐              ┌──────────┐
        │  Start   │              │ Restart  │
        └────┬─────┘              └────┬─────┘
             │                         │
┌────────────┴──────────────────────────────┐
│  Read Amplified Signal with 2nd Schmitt Trigger  │
└────────────┬──────────────────────────────┘
             │
┌────────────┴──────────────────────────────┐
│  Wait prescribed Time Period < Time for 1 Bit.   │
└────────────┬──────────────────────────────┘
             │
┌────────────┴──────────────────────────────┐
│  Read Amplified Signal with 1st Schmitt Trigger  │
└────────────┬──────────────────────────────┘
```

901 Are the Outputs of the two Schmitt Triggers the same?

Yes        No

902  Has a Full Code been read?

No        Yes

Decode if necessary

903 Does the code match any authenticated codes?

Yes        No

Accept        Do Not Accept

End        End

Figure 9.

Figure 10.

First Hysteresis Circuit
Switching Levels

Second Hysteresis
Circuit Switching Levels

(4)

(3)

(2)

(1)

Voltage

Figure 11.

First Hysteresis Circuit
Switching Levels

Second Hysteresis
Circuit Switching Levels

(4)

(2&3)

(1)

Voltage

Figure 12.

Second Hysteresis Circuit
Switching Levels

First Hysteresis Circuit
Switching Levels

(3)

(4)

(2)

(1)

Voltage

## Figure 13.

First Hysteresis Circuit
Switching Levels

Second Hysteresis Circuit
Switching Levels

(4)

(3)

(1)

(2)

Voltage

## Figure 14.

Figure 15.

Figure 16.

EP 1 457 914 A1

**European Patent Office**

**EUROPEAN SEARCH REPORT**

Application Number

EP 03 00 4992

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 71997 A (RIZZO PIERRE ;DELL OVA FRANCIS (FR); GEMPLUS CARD INT (FR); ST MIC) 27 September 2001 (2001-09-27) * page 10, line 6 - page 11, line 11 * * figure 4 * --- | 1,16,26, 39,47-51 | G06K7/00 H04L1/20 H04L27/06 |
| A | EP 0 949 786 A (SIEMENS AG) 13 October 1999 (1999-10-13) * paragraph [0011] - paragraph [0015] * --- | 1,16,26, 39,47-51 | |
| A | US 6 049 292 A (TOBERGTE WOLFGANG ET AL) 11 April 2000 (2000-04-11) * column 3, line 31 - column 4, line 14 * * figure 3 * ----- | 1,16,26, 39,47-51 | |

| | | | TECHNICAL FIELDS SEARCHED (Int.Cl.7) |
|---|---|---|---|
| | | | G06K H04L |

The present search report has been drawn up for all claims

| Place of search | Date of completion of the search | Examiner |
|---|---|---|
| THE HAGUE | 6 August 2003 | Goossens, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 457 914 A1**

**ANNEX TO THE EUROPEAN SEARCH REPORT
ON EUROPEAN PATENT APPLICATION NO.**          EP 03 00 4992

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2003

| Patent document cited in search report | | Publication date | Patent family member(s) | | Publication date |
|---|---|---|---|---|---|
| WO 0171997 | A | 27-09-2001 | FR | 2806855 A1 | 28-09-2001 |
| | | | AU | 4428101 A | 03-10-2001 |
| | | | EP | 1269702 A1 | 02-01-2003 |
| | | | WO | 0171997 A1 | 27-09-2001 |
| | | | US | 2003128070 A1 | 10-07-2003 |
| EP 0949786 | A | 13-10-1999 | EP | 0949786 A1 | 13-10-1999 |
| US 6049292 | A | 11-04-2000 | DE | 19608451 A1 | 11-09-1997 |
| | | | EP | 0794501 A2 | 10-09-1997 |
| | | | JP | 9247227 A | 19-09-1997 |

EPO FORM P0459

For more details about this annex : see Official Journal of the European Patent Office, No. 12/82

28